# EUROPÄISCHE PATENTSCHRIFT

(11) **EP 0 345 204 B1**
(45) Veröffentlichungstag und Bekanntmachung des Hinweises auf die Patenterteilung: **24.02.1993**
(21) Anmeldenummer: 89710049.1
(22) Anmeldetag: 31.05.1989
(51) Int. Cl.: F03D 9/00

(54) **Windkraftanlage**
Wind energy converter
Eolienne

(30) Priorität: 01.06.1988 DE 3818597
(43) Veröffentlichungstag der Anmeldung: 06.12.1989
(73) Patentinhaber: BERNHARD KIRSCH GMBH + CO KG, D-54293 Trier (DE)
(72) Erfinder: Casel, Josef, D-5558 Schweich (DE); Knitterscheidt, Heinz, D-5503 Konz-Könen (DE)
(74) Vertreter: Schönherr, Wolfgang

(56) Entgegenhaltungen:
- ELEKTROTECHNISCHE ZEITSCHRIFT E.T.Z., Band 106, Nr. 3, Februar 1985, Seiten112-116, Berlin, DE; M. ABBE et al.: "Kleine Windenergiekonverter für autonomeStromversorgungen"
- ELEKTROTECHNISCHE ZEISCHRIFT, Band 100, Nr. 21, Oktober 1979, Seiten 1203-1205;H. LAUER et al.: "15-kW-Windkraftanlage arbeitet auf das Verbundnetz"

## Beschreibung

Die Erfindung betrifft eine Windkraftanlage aus einer Windturbine od.dgl. und einem von der Windturbine antreibbaren, kondensatorerregten Asynchrongenerator für Insel- und/oder Netzparallelbetrieb.

Bei derartigen Windkraftanlagen im Inselbetrieb ist es bekannt, nach Anlaufen der Windturbine und damit des Asynchrongenerators eine Selbsterregung des Asynchrongenerators durch eine parallel zu den Ausgangsklemmen des Asynchrongenerators geschaltete Erregerkondensatorbatterie zu bewirken, wobei über eine Steuereinrichtung Kondensatoren zu- und abgeschaltet werden.

Eine derartige Anordnung ist z.B. aus ELEKTROTECHNISCHE ZEITSCHRIFT E.T.Z., Band 106, Nr. 3, Februar 1985, Seiten 112-116, Berlin, DE ; ABBE und TIMMERT: "kleine Windenergiekonverter für autonome Stromversorgungen" bekannt.

Aus Harz, Kondensatorerregte Asynchrongeneratoren, Siemens-Zeitschrift 1951, Heft 4, Seiten 199 - 205 ist es bekannt, daß die Größe des Erregerkondensators für den Betrieb eines Asynchrongenerators erhebliche Bedeutung hat. Der von dem Erregerkondensator zu versorgende Blindstrombedarf des Generators ist nicht konstant, sondern nimmt mit der Belastung des Generators zu, während jedoch der Kondensator bei konstanter Frequenz und Spannung nur eine konstante Blindleistung liefert.

Ist der Erregerkondensator zu klein dimensioniert, so entregt sich der Generator zu früh und die Spannung bricht zusammen. Ist dagegen der Erregerkondensator zu groß dimensioniert, so ergibt sich eine starke Reduzierung des Wirkungsgrades bei starker thermischer Belastung des Generators.

Es ist daher üblicher Stand der Technik, daß eine Regelung des Asynchrongenerators in Abhängigkeit von der Belastung zu erfolgen hat, wobei üblicherweise die Kapazitäten ab- oder zugeschaltet werden.

So ist es gleichfalls bekannt, bei Windkraftanlagen in Abhängigkeit von der Windgeschwindigkeit Kondensatoren zu- und abzuschalten. In der Regel werden bei steigender Windgeschwindigkeit Kondensatoren zugeschaltet, während bei sich bei verringender Windgeschwindigkeit Kondensatoren abgeschaltet werden.

Es sind ferner Windkraftanlagen bekannt, bei denen über Thyristoren durch Zu- und Abschalten von Induktivitäten ein Teil der Kapazität der Kondensatorbatterie kompensiert wird.

Diese bekannten Steuereinrichtungen sind sehr aufwendig und damit konstenintensiv. Außerdem vergeht relativ viel Zeit, bis der Asynchrongenerator tatsächlich elektrische Energie liefert, so daß kurze Windstöße in der Regel nicht ausgenutzt werden können.

Bei im Netzparallelbetrieb gefahrenen derartigen Windkraftanlagen wird der Asynchrongenerator bei Erreichen der Nenndrehzahl mit dem Netz verbunden. Erst dann erfolgt die Erregung des Asynchrongenerators, wobei der zur Auferregung notwendige Erregerstrom aus dem Netz mit Hilfe von schaltbaren Dämpfungswiderständen entnommen wird.

Bekannt ist weiterhin, daß den Ausgangsklemmen des Asynchrongenerators nach Erregung durch das Netz zur Verbesserung des Wirkungsgrades Kondensatoren parallel geschaltet werden. Auch diese bekannte Vorrichtung ist sehr aufwendig und danit kostenintensiv. Darüber hinaus vergeht auch bei diesen bekannten Vorrichtungen viel Zeit, bis der Asynchrongenerator tatsächlich elektrische Energie in das Netz einspeist, so daß kurze Windstöße nicht ausgenutzt werden können (siehe z.B. ELEKTROTECHNISCHE ZEISCHRIFT, Band 100, Nr. 21, Oktober 1979, Seiten 1203-1205; H. LAUER et al.: "15-kW-Windkraftanlage arbeitet auf das Verbundnetz").

Die Aufgabe der Erfindung besteht darin, eine Windkraftanlage der in Rede stehenden Art derart weiterzubilden, daß über einen einen großen Betriebsbereich ohne weitere Regelung elektrische Energie mit hohem Wirkungsgrad geliefert wird, wobei die Anlage einfach und robust in ihrem Aufbau ist.

Diese Aufgabe wird dadurch gelöst, daß die ständig zu den Ausgangsklemmen des Asynchrongenerators fest parallelgeschaltete Erregerkondensatorbatterie eine kapazitive Erregerblindleistung hat, die im Nennarbeitspunkt betragsmäßig etwa doppelt so groß wie die Gesamtleistung des Asynchrongenerators ist.

Durch die vorgeschlagene Dimensionierung des Asynchrongenerators wird zwar der Wirkungsgrad des Asynchrongenerators verringert, insgesamt aber die Wirtschaftlichkeit der Windkraftanlage erhöht.

Durch die Vergrößerung der Erregerkapazität ergibt sich zunächst eine sehr viel frühere Erregung des Asynchrongenerators, so daß von der Anlage sehr viel früher elektrische Energie geliefert wird. Die Überdimensionierte Erregerkapazität gewährleistet durch ihre Dämpfung auch die notwendige Stabilisierung des dynamischen Verhaltens der Anlage bei höheren Windgeschwindigkeiten.

Durch den Wegfall der notwendigen Steuervorrichtungen für die Erregerkapazität ist eine einfache und robuste Bauform der Anlage gefunden worden, so daß sich insgesamt über eine sehr viel größeren Betriebsbereich eine hohe Leistungsfähigkeit der Anlage ergibt. Dies gilt auch beim Betrieb der Windkraftanlage im Netzbetrieb, da die Dimensionierung der Erregerkondensatorbatterie ein problemloses Zuschalten der Anlage zum Netz ermöglicht.

Vorteilhaft ist für den Inselbetrieb ein von einer Überwachungseinrichtung steuerbares Verbraucherkoppelschütz zur Verbindung des Asynchrongenerators mit einem Verbraucher vorgesehen.

Vorzugsweise ist für den Netzparallelbetrieb eine von einer Steuereinrichtung steuerbares Netzkoppelschütz zur Verbindung von Netz und Asynchrongenerator vorgesehen.

Vorzugsweise ist die Steuereinrichtung als Frequenz- und Spannungsphasenlagenvergleicher der Ausgangsspannungen von Netz und Asynchrongenerator ausgebildet. Vorzugsweise ist die Steuereinrichtung derart ausgebildet, daß bei annähernder Frequenzgleichheit und Phasenlage von Netzspannung und Asynchrongeneratorspannung das Netzkoppelschütz betätigt ist.

Bei einem vorteilhaften Verfahren zum Zuschalten der Windkraftanlage an ein Netz wird der durch die Kondensatorbatterie beim Antrieb durch die Windturbine selbsterregte Asynchrongenerator bei annähernder Frequenzgleichheit und Phasenlage seiner Ausgangsspannung und der Netzspannung mit dem Netz verbunden.

Die erfindungsgemäße Windkraftanlage ist beispielhaft im Schaltbild dargestellt. Ein Asynchrongenerator (1) hat an seinen Ausgangsklemmen ständig eine Erregerkondensatorbatterie (2), die derart bemessen ist, daß die kapazitive Erregerblindleistung betragsmäßig etwa doppelt so groß wie die Gesamtleistung des Asynchrongenerators ist.

Die Ausgangsklemmen des Asynchrongenerators (1) sind über ein Verbraucherkoppelschütz (K1) mit einem Verbraucher und über ein Netzkoppelschütz mit einem Netz verbindbar.

Bei Inselbetrieb steuert eine Überwachungseinrichtung (3) das Verbraucherkoppelschütz (K1), während bei Netzparallelbetrieb eine Steuereinrichtung (4) und die Überwachungseinrichtung (3) das Netzkoppelschütz (K2) steuern. Bei Netzparallelbetrieb überwacht zusätzlich ein Rückleistungsrelais (5) die Leistungsrichtung der Verbindung zwischen Asynchrongenerator (1) und Netz.

Im Stillstand der Windturbine steht auch der Asynchrongenerator (1) still und ist entregt. Kommt Wind auf und dreht somit die Windturbine den Asynchrongenerator, so erregt sich der Asynchrongenerator aufgrund der parallelgeschalteten Erregerkondensatorbatterie (2). Aufgrund der gewählten Größe der Erregerkondensatorbatterie (2), die kapazitive Erregerblindleistung ist betragsmäßig etwa doppelt so groß wie die Gesamtleistung des Asynchrongenerators, tritt eine sehr schnelle Erregung des Asynchrongenerators auf, so daß der Asynchrongenerator schon nach kurzer Zeit elektrische Energie liefert.

Bei Inselbetrieb ist über das Verbraucherkoppelschütz (K1) der Asynchrongenerator (1) mit dem Verbraucher verbunden. Bei Überschreiten der Maximalleistung bei Inselbetrieb wird durch die Überwachungseinrichtung (3) eine Bremse od. dgl. der Windturbine in Tätigkeit gesetzt und das Verbraucherkoppelschütz (K1) nach Ablauf einer Verzögerungszeit abgeschaltet.

Bei Netzparallelbetrieb überwacht die Steuereinrichtung (4) die Phasenlage der Spannung und die Frequenz des Netzes und des Asynchrongenerators (1). Bei ausreichender Übereinstimmung von Netz- und Asynchrongeneratoraugenblickswerten, wobei die Erfahrung gezeigt hat, daß die annähernde Übereinstimmung der Frequenz und Phasenlage der Asynchrongeneratorspannung und der Netzspannung ausreichend ist, wird durch die Steuereinrichtung (4) das Netzkoppelschütz (K2) betätigt, so daß der Asynchrongenerator (1) mit dem Netz verbunden ist. Die Erfahrung hat gezeigt, daß die Erregerkondensatorbatterie (2) eine stoßfreie Netzzuschaltung des Asynchrongenerators (1) ermöglicht. Die Erregerkondensatorbatterie (2) dient einmal zur selbstständigen Auferregung des Asynchrongenerators, ermöglicht eine stoßfreie Netzzuschaltung des erregten Asynchrongenerators und dient im Betrieb außerdem als Blindstromkompensationseinrichtung. Das Rückleistungsrelais (5) überwacht die Energierichtung zwischen Asynchrongenerator (1) und Netz. Wird die Windgeschwindigkeit zu gering, so daß der Asynchrongenerator vom Netz angetrieben wird, so wird durch das Netzkoppelschütz (K2) der Asynchrongenerator vom Netz getrennt. Die Überwachungseinrichtung (3) betätigt auch im Netzbetrieb bei zu hoher Leistung des Asynchrongenerators (1) ein Bremse der Windturbine und schaltet das Netzkoppelschütz (K2) zeitverzögert ab.

Die Erfahrung hat gezeigt, daß durch die beschriebene Ausgestaltung des Asynchrongenerators eine schnell Erregung des Generators erfolgt, so daß bereits nach kurzer Zeit auch bei kurzen Windstößen elektrische Energie geliefert wird. Vorteilhaft ist insbesondere, daß keine Anlaufverfahren durch Zu- und Abschalten von Kondensatoren, Induktivitäten oder Dämpfungswiderstände zur Erregung des Asynchrongenerators (1) notwendig sind.

Die Erfahrung hat gezeigt, daß die gewählte Größe der ständig an den Ausgangsklemmen des Asynchrongenerators (1) angeschalteten Erregerkondensatorbatterie (2) zu einer Stabilisierung des dynamischen Verhaltens der Windkraftanlage führt. Da die Erregerkondensatorbatterie zur Erregung des Asynchrongenerators auch bei Leerlauf einen erheblichen Teil der Leistung der Windturbine benötigt, wirkt sie als Dämpfung. Mit zunehmender Drehzahl des Asynchrongenerators steigt die benötige Erregerleistung aufgrund der auftretenden Sättigung und Verluste überproportional, so daß eine überproportionale Dämpfung (Bremsung) auftritt. Dadurch kann die Windkraftanlage in einem größeren Betriebsbereich elektrische Energie erzeugen, da es zu weniger Zwangsbremsungen der Windturbine kommt.

Insgesamt ermöglicht die gewählte Erregerkondensatorbatterie ein rasches Auferregen und damit Einpendeln im Arbeitspunkt. Es werden außerdem im wesentlichen Drehmomentstöße durch Überfahren der vorgegebenen Drehzahl verhindert. Außerdem ist durch Änderung der Größe der Erregerkondensatorbatterie (2) eine gewisse Anpassung der Windkraftanlage an ihren Standort - mehr oder wenig böig - möglich.

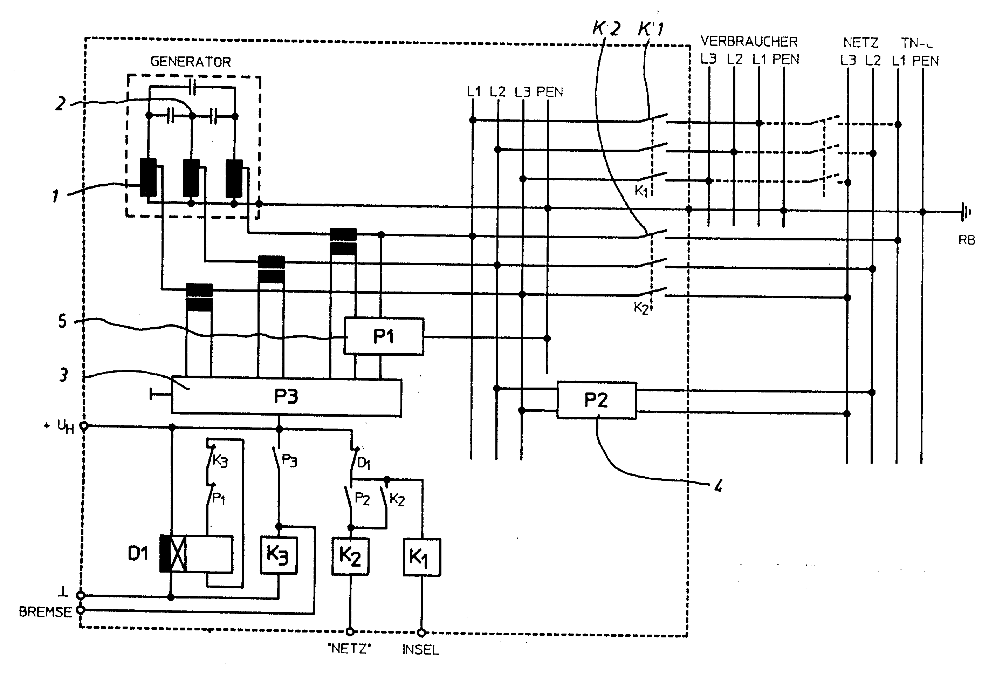

## Patentansprüche

1. Windkraftanlage aus einer Windturbine od. dgt. und einem von der Windturbine antreibbaren, kondensatorerregten Asynchrongenerator für Inset- und/oder Netzparallelbetrieb, dadurch gekennzeichnet, daß die ständig zu den Ausgangsklemmen des Asynchrongenerators (1) fest parallelgeschaltete Erregerkondensatorbatterie (2) eine kapazitive Erregerblindleistung hat, die im Nennarbeitspunkt des Asynchrongenerators betragsmäßig etwa doppelt so groß wie die Gesamtleistung Summe aus Nennleistung und Verlustleistung des Asynchrongenerators ist.

2. Windkraftanlage nach Anspruch 1, dadurch gekennzeichnet, daß für den Inselbetrieb ein von einer Überwachungseinrichtung (3) steuerbares Verbraucherkoppelschütz (k1) zur Verbindung des Asynchrongenerators (1) mit einem Verbraucher vorgesehen ist.

3. Windkraftanlage nach Anspruch 1, dadurch gekennzeichnet, daß für den Netzparallelbetrieb ein von einer Steuereinrichtung (4) steuerbares Netzkoppelschütz (K2) zur Verbindung von Netz und Asynchrongenerator (1) vorgesehen ist.

4. Windkraftanlage nach Anspruch 3, dadurch gekennzeichnet, daß die Steuereinrichtung (4) als Frequenz- und Spannungsphasenlagenvergleicher der Ausgangsspannungen von Netz und Asynchrongenerator (1) ausgebildet ist.

5. Windkraftanlage nach Anspruch 4, dadurch gekennzeichnet, daß die Steuereinrichtung (4) derart ausgebildet ist, daß bei annähernder Frequenzgleichheit und Phasenlage von Netzspannung und Asynchrongeneratorspannung das Netzkoppelschütz (K2) betätigt ist.

6. Verfahren zum Zuschalten der Windkraftanlage nach den Ansprüchen 1 und 3 bis 5 zu einem Netz, dadurch gekennzeichnet, daß der durch die Erregerkondensatorbatterie (2) bei Antrieb durch die Windturbine selbsterregte Asynchrongenerator (1) bei annähernder Frequenzgleichheit und Phasenlage seiner Ausgangsspannung und der Netzspannung mit dem Netz verbunden wird.

## Claims

1. Wind-driven power station comprising a wind turbine or the like and a wind-turbine driven, condenser-activated asynchronous generator for island and/or net-parallel operation **characterised in that** an exciter-condenser battery (2), which is permanently connected in parallel with the output sockets of the asynchronous generator (1), has a capacitive reactive exiter output, the amount of which in the nominal quiescent point of the asynchronous generator is approximately twice that of the overall output sum of nominal output and power dissipation of the asynchronous generator.

2. Wind-driven power station according to claim 1, **characterised in that**, for island operation, a consumer-coupling protection (K1) which is controlled by a monitoring device (3) is provided for connecting an asynchronous generator (1) to a consumer.

3. Wind-driven power station according to claim 1, **characterised in that**, for net-parallel operation, a net-coupling protection (K2) which is controlled by a control device (4) is provided for connecting net and asynchronous generator (1).

4. Wind-driven power station according to claim 3, **characterised in that** the control device (4) is a frequency- and voltage-phase comparator of the output voltages of net and asynchronous generator (1).

5. Wind-driven power station according to claim 4, **characterised in that** the control device (4) is arranged so that the net-coupling protection (K2 is operated at virtually identical frequency and phase position of net voltage and asynchronous-generator voltage.

6. Method of connecting the wind-driven power station according to claims 1 and 3 to 5 to a net, **characterised in that** the asynchronous generator (1), which is self-excited by the exciter-condenser battery (2) when driven by the wind turbine, is connected to the net at virtually identical frequency and phase position of its output voltage and the net.

## Revendications

1. Eolienne constituée par une turbine à vent ou analogue, et une génératrice asynchrone excitée par des condensateurs et entraînée par ladite turbine à vent, destinée à un fonctionnement isolé ou en parallèle avec le réseau, caractérisée en ce que la batterie de condensateurs d'excitation (2) branchée définitivement en parallèle sur les bornes de sortie de la génératrice asynchrone (1) délivre une énergie réactive d'excitation capacitive au point du fonctionnement nominal de la génération asynchrone dont la valeur est par définition sensiblement égale au double de la somme de la puissance nominale et de la puissance perdue de la génératrice asynchrone.

2. Eolienne selon la revendication 1, caractérisée en ce qu'il est prévu pour le fonctionnement isolé un contacteur (k₁) de couplage avec l'utilisation pour la liaison entre la génératrice asynchrone (1) et le circuit utilisateur, contacteur commandé par un dispositif de contrôle (3).

3. Eolienne selon la revendication 1, caractérisée en ce qu'il est prévu pour le fonctionnement en parallèle avec le réseau un contacteur de couplage au réseau (K₂) destiné à établir la liaison entre le réseau et la génératrice asynchrone (1), contacteur commandé par un dispositif de contrôle (4).

4. Eolienne selon la revendication 3, caractérisée en ce que le dispositif de contrôle (4) est réalisé sous la forme d'un comparateur de fréquence et de déphasage des tensions entre la tension du réseau et la tension de sortie de la génératrice asynchrone (1).

5. Eolienne selon la revendication 4, caractérisée en ce que le dispositif de contrôle (4) est réalisé de telle manière que le contacteur de couplage au réseau (K₂) est actionné pour une égalité approximative de fréquence et de phase entre la tension réseau et la tension de sortie de la génératrice asynchrone.

6. Procédé pour le couplage au réseau de l'éolienne selon les revendications 1 et 3 à 5, caractérisé en ce que la génératrice asynchrone (1) entraînée par la turbine à vent et auto-excitée par la batterie de condensateurs d'excitation (2), est raccordée au réseau pour une égalité approximative entre la fréquence et la phase de sa tension de sortie et de la tension du réseau.
